# EUROPEAN PATENT APPLICATION

(11) **EP 4 651 469 A1**
(43) Date of publication of application: **19.11.2025**
(21) Application number: 23920733.5
(22) Date of filing: 27.09.2023
(51) Int. Cl.: H04L 67/148

(54) **RESOURCE CONFIGURATION METHOD, SYSTEM, AND RELATED DEVICE**

(30) Priority: 07.02.2023 CN 202310080442; 02.06.2023 CN 202310651407
(71) Applicant: Huawei Cloud Computing Technologies Co., Ltd., Guiyang, Guizhou 550025 (CN)
(72) Inventor: LIU, Dongdong, Guiyang, Guizhou 550025 (CN)
(74) Representative: Grünecker Patent- und Rechtsanwälte PartG mbB
(86) International application number: PCT/CN2023/122003
(87) International publication number: WO 2024/164541

(57) **Abstract**

This application provides a resource configuration method, including: obtaining configuration information provided by a user, where the configuration information is used to describe a plurality of resources configured for a first cloud service; creating a second cloud service based on the configuration information and an original resource allocated to the first cloud service, where the second cloud service and the second cloud service share an environment type resource, and a workload type resource of the second cloud service is isolated from a workload type resource of the first cloud service; and migrating traffic on the first cloud service to the second cloud service according to a target deployment policy. Because the second cloud service and the first cloud service share the environment type resource, and the workload type resources are isolated from each other, the first cloud service and the second cloud service can coexist. Therefore, resource configuration update can be performed on a cloud service in a high-order update manner such as gray deployment/batch rolling deployment. In addition, this application further provides a corresponding resource configuration system and a related device.

## Description

This application claims priorities to Chinese Patent Application No. 202310080442.0, filed with the China National Intellectual Property Administration on February 7, 2023 and entitled "RESOURCE CONFIGURATION METHOD AND APPARATUS, AND RELATED DEVICE", and to Chinese Patent Application No. 202310651407.X, filed with the China National Intellectual Property Administration on June 2, 2023 and entitled "RESOURCE CONFIGURATION METHOD AND SYSTEM, AND RELATED DEVICE", both of which are incorporated herein by reference in their entireties.

### TECHNICAL FIELD

This application relates to the field of cloud computing technologies, and in particular, to a resource configuration method and system, and a related device.

### BACKGROUND

Kubernetes, K8s for short, is a container technology-based cluster system and is open-source. A cloud service implemented based on a K8s resource supports user-oriented final configuration (that is, a final configuration result is completely consistent with configuration information provided by a user). Therefore, in a cloud native scenario, a cloud service (for example, a cloud native microservice) and a resource set allocated to the cloud service may be managed in a unified manner through final configuration.

Currently, in an operation and maintenance scenario such as cloud service upgrade, the user usually provides, for an open-source Terraform IaC system, final configuration information used to update a cloud service resource, so that the Terraform IaC system performs a configuration change operation to update the cloud service resource to the final configuration specified by the user. However, the Terraform IaC system can implement rolling upgrade on the cloud service only in this manner of updating resource configuration. To be specific, when an abnormality occurs after the cloud service completes final configuration, and the resource configuration of the cloud service is rolled back to a resource configuration used before the update, the resource configuration of the cloud service cannot be updated in another higher-order update manner.

### SUMMARY

In view of this, embodiments of this application provide a resource configuration method, to update resource configuration of a cloud service in a higher order update manner such as gray upgrade or batch rolling upgrade. This application further provides a corresponding resource configuration system, a computing device cluster, a computer-readable storage medium, and a computer program product.

According to a first aspect, this application provides a resource configuration method. The method may be performed by a corresponding resource configuration system, to update resource configuration of a cloud service in a high order update manner. During specific implementation, the resource configuration system obtains configuration information provided by a user, where the configuration information is used to describe a plurality of cloud resources configured for a first cloud service. For example, one-time final configuration information provided by the user may be obtained. Then, the resource configuration system creates a second cloud service based on the configuration information and an original resource allocated to the first cloud service, where the second cloud service and the second cloud service share an environment type resource, and a workload type resource of the second cloud service is isolated from a workload type resource of the first cloud service. In other words, a workload of the first cloud service and a workload of the second cloud service run independently without affecting each other. Therefore, the resource configuration system migrates traffic on the first cloud service to the second cloud service based on a target deployment policy. The target deployment policy may be, for example, an advanced deployment policy such as gray deployment or batch rolling deployment.

Because the created second cloud service and the first cloud service share the environment type resource, and the workload type resources of the two cloud services are isolated from each other, the first cloud service and the second cloud service can coexist in a process of updating resource configuration of the cloud service. Therefore, based on the two coexisting cloud services, the traffic on the first cloud service can be migrated to the second cloud service in a manner such as gray deployment or batch rolling deployment. That is, a higher order update manner such as gray deployment or batch rolling deployment can be supported to update the resource configuration of the cloud service.

In a possible implementation, when creating the second cloud service based on the configuration information and the original resource allocated to the first cloud service, the resource configuration system may specifically first split the configuration information, to obtain first configuration information used to describe the environment type resource and second configuration information used to describe the workload type resource. Then, the resource configuration system determines a first resource based on the first configuration information and the original resource allocated to the first cloud service, where the first resource is the environment type resource that is described in the first configuration information and that is not included in the original resource; and determines a second resource, where the second resource is the workload type resource described in the second configuration information. Therefore, the resource configuration system creates the second cloud service based on the original resource allocated to the first cloud service, the first resource, and the second resource. In this way, the created second cloud service and the first cloud service can share the environment type resource, and the workload type resources corresponding to the two cloud services are isolated from each other, so that the first cloud service and the second cloud service can simultaneously run in a computing device cluster 100. Therefore, a basis is established for implementing a high order resource configuration manner.

In a possible implementation, the first resource and an environment type resource included in the original resource are recorded in a same stack, and the second resource and a workload type resource included in the original resource are recorded in different stacks. In this way, the created second cloud service and the first cloud service can share the environment type resource in a same stack, and the two cloud services are established based on workload type resources in different stacks, so that workloads of the first cloud service and the second cloud service can be isolated from each other.

In a possible implementation, the target deployment policy includes a blue-green deployment policy, a gray deployment policy, or a batch rolling deployment policy. In this way, the resource configuration system can support implementation of a plurality of high order resource deployment capabilities, and implement a plurality of complex resource change control procedures.

In a possible implementation, when the target deployment policy is the gray deployment policy, when performing traffic migration, the resource configuration system specifically segments the traffic on the first cloud service to obtain a first traffic fragment and a second traffic fragment, and migrates the first traffic fragment to the second cloud service. Therefore, when the first traffic fragment passes abnormality check on the second cloud service, the second traffic fragment is migrated to the second cloud service. In this way, traffic fragments are migrated from the first cloud service to the second cloud service one by one, so that gray deployment of the cloud service can be implemented, and security and smoothness of cloud service upgrade/resource configuration update can be improved.

In a possible implementation, the target deployment policy is specifically the batch rolling deployment policy. In this case, when performing traffic migration, the resource configuration system specifically first obtains batch information provided by the user, where the allocation information indicates a quantity of reduced pods of the first cloud service and a quantity of added pods of the second cloud service in each batch, and a quantity of pods included when the second cloud service is created is a preset value. Therefore, the resource configuration system reduces, in batches based on the batch information, a quantity of pods included in the first cloud service, and increases the quantity of pods included in the second cloud service. In this way, the traffic on the first cloud service can be gradually migrated to the second cloud service by reducing pods in the first cloud service and adding pods in the second cloud service in batches. In other words, traffic on the pod in the first cloud service is migrated to the pod in the second cloud service, to implement batch rolling deployment of cloud services, and improve security and smoothness of cloud service upgrade/resource configuration update.

In a possible implementation, when decreasing the quantity of pods included in the first cloud service and increasing the quantity of pods included in the second cloud service in batches, the resource configuration system may specifically first obtain confirmation information of the user for a target batch, where the target batch is one of a plurality of batches indicated by the batch information. Therefore, the resource configuration system decreases, in batches based on the allocation information and the confirmation information for the target batch, the quantity of pods included in the first cloud service and increases the quantity of pods included in the second cloud service. Specifically, a quantity of pods in the first cloud service corresponding to a next batch of the target batch may be decreased, and a quantity of pods in the second cloud service corresponding to the next batch may be increased.

In a possible implementation, the first cloud service and the second cloud service belong to cloud services of different versions. In this way, the resource configuration system may implement version upgrade of the cloud service in a high order resource deployment manner. Alternatively, the first cloud service and the second cloud service belong to cloud services of a same version. In this way, the resource configuration system may update the resource configuration of the cloud service in the high order resource deployment manner.

According to a second aspect, this application provides a resource configuration system. The resource configuration system includes: an interaction module, configured to obtain configuration information provided by a user, where the configuration information is used to describe a plurality of resources configured for a first cloud service; a creation module, configured to create a second cloud service based on the configuration information and an original resource allocated to the first cloud service, where the second cloud service and the first cloud service share an environment type resource, and a workload type resource of the second cloud service is isolated from a workload type resource of the first cloud service; and a traffic management module, configured to migrate traffic on the first cloud service to the second cloud service based on a target deployment policy.

In a possible implementation, the creation module is configured to: split the configuration information to obtain first configuration information used to describe the environment type resource and second configuration information used to describe the workload type resource; determine a first resource based on the first configuration information and the original resource allocated to the first cloud service, where the first resource is the environment type resource that is described in the first configuration information and that is not included in the original resource; determine a second resource, where the second resource is the workload type resource described in the second configuration information; and create the second cloud service based on the original resource allocated to the first cloud service, the first resource, and the second resource.

In a possible implementation, the first resource and an environment type resource included in the original resource are recorded in a same stack, and the second resource and a workload type resource included in the original resource are recorded in different stacks.

In a possible implementation, the target deployment policy includes a blue-green deployment policy, a gray deployment policy, or a batch rolling deployment policy.

In a possible implementation, the target deployment policy is the gray deployment policy, and the traffic management module is configured to: segment the traffic on the first cloud service to obtain a first traffic fragment and a second traffic fragment; migrate the first traffic fragment to the second cloud service; and migrate the second traffic fragment to the second cloud service when the first traffic fragment passes abnormality check on the second cloud service.

In a possible implementation, the target deployment policy is the batch rolling deployment policy, and the traffic management module is configured to: obtain batch information provided by the user, where the batch information indicates a quantity of reduced pods of the first cloud service and a quantity of added pods of the second cloud service in each batch, and a quantity of pods included when the second cloud service is created is a preset value; and decrease, in batches based on the batch information, a quantity of pods included in the first cloud service, and increase the quantity of pods included in the second cloud service.

In a possible implementation, the traffic management module is configured to: obtain confirmation information of the user for a target batch, where the target batch is one of a plurality of batches indicated by the batch information; and decrease, in batches based on the batch information and the confirmation information, the quantity of pods included in the first cloud service, and increase the quantity of pods included in the second cloud service.

In a possible implementation, the first cloud service and the second cloud service belong to cloud services of different versions; or the first cloud service and the second cloud service belong to cloud services of a same version.

It should be noted that the resource configuration system provided in the second aspect corresponds to the resource configuration method provided in the first aspect. Therefore, for technical effect of any one of the second aspect and the implementations of the second aspect, refer to the technical effect of the first aspect or the corresponding implementations of the first aspect.

According to a third aspect, this application provides a computing device. The computing device includes a processor and a memory. The processor is configured to execute instructions stored in the memory, so that the computing device performs the resource configuration method according to any one of the first aspect or the possible implementations of the first aspect.

According to a fourth aspect, this application provides a computing device cluster. The computing device includes at least one computing device, and the at least one computing device includes at least one processor and at least one memory. The at least one memory is configured to store instructions, and the at least one processor executes the instructions stored in the at least one memory, so that the computing device cluster performs the resource configuration method according to any one of the first aspect or the possible implementations of the first aspect. It should be noted that, the memory may be integrated into the processor, or may be independent of the processor. The at least one computing device may further include a bus. The processor is connected to the memory through the bus. The memory may include a readable memory and a random access memory.

According to a fifth aspect, this application provides a computer-readable storage medium, where the computer-readable storage medium stores instructions. When the instructions are run on at least one computing device, the at least one computing device is enabled to perform the resource configuration method in any one of the first aspect or the possible implementations of the first aspect.

According to a sixth aspect, this application provides a computer program product including instructions. When the computer program product runs on at least one computing device, the at least one computing device is enabled to perform the resource configuration method in any one of the first aspect or the possible implementations of the first aspect.

In this application, the implementations provided in the foregoing aspects may be further combined to provide more implementations.

### BRIEF DESCRIPTION OF DRAWINGS

To describe technical solutions in embodiments of this application more clearly, the following briefly introduces accompanying drawings used for describing the embodiments. It is clear that the accompanying drawings in the following description show merely some embodiments of this application, and a person of ordinary skill in the art may still derive other drawings from these accompanying drawings.
FIG. 1 is a diagram of an example application scenario according to this application;
FIG. 2 is a schematic flowchart of a resource configuration method according to this application;
FIG. 3 is a diagram of an example interaction interface according to this application;
FIG. 4A to FIG. 4C are a diagram of configuring a resource according to this application;
FIG. 5 is a diagram of migrating traffic on a first cloud service according to a gray deployment policy according to this application;
FIG. 6 is a diagram of an example configuration interface according to this application;
FIG. 7A and FIG. 7B are a diagram of migrating traffic on a first cloud service according to a batch rolling deployment policy according to this application;
FIG. 8 is a diagram of an example configuration interface according to this application;
FIG. 9 is a diagram of a hardware structure of a computing device according to this application; and
FIG. 10 is a diagram of a structure of a computing device cluster according to this application.

### DESCRIPTION OF EMBODIMENTS

The following describes the solutions in embodiments provided in this application with reference to the accompanying drawings in this application.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application.

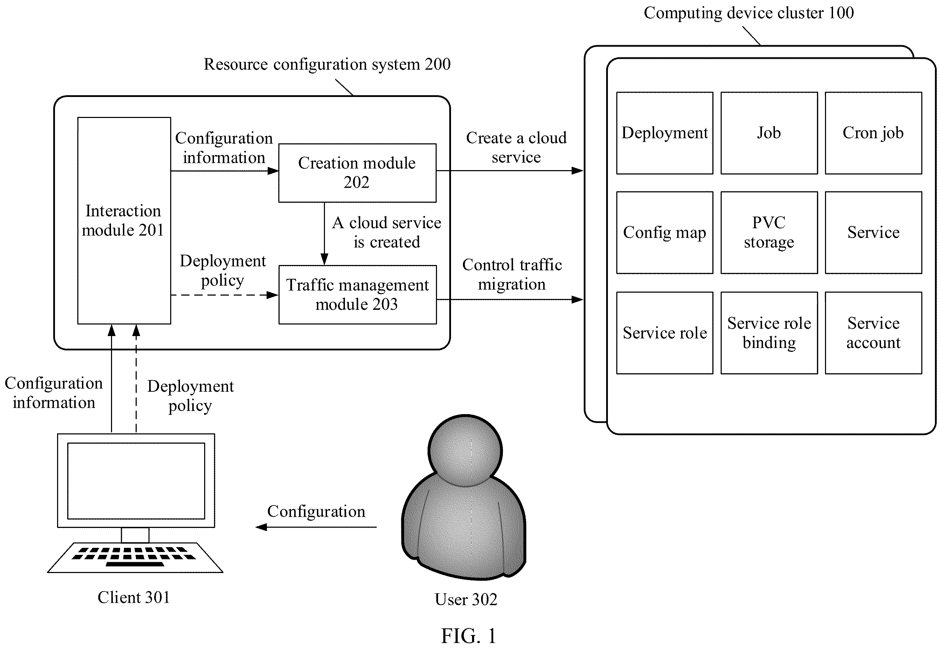

FIG. 1 is a diagram of an example resource configuration scenario. In the application scenario shown in FIG. 1, a computing device cluster 100 may include a plurality of devices (not shown in FIG. 1) such as a computing device, a storage device, and a network device, and are configured to provide corresponding plurality of types of resources, for example, configured to provide corresponding plurality of types of resources such as deployment (deployment), job (job), cron job (cron job), config map (config map), persistent volume claim (persistent volume claim, PVC) storage, service (service), service role (service role), service role binding (service role binding), and service account (service account) shown in FIG. 1. In actual application, the computing device cluster 100 may further include resources corresponding to other types, for example, resources corresponding to types such as ingress (ingress), secret (secret), and role based access control (role based access control, RBAC) authentication.

One or more cloud services, such as a cloud query service, a cloud storage service, a cloud computing service, and a cloud conference service, may be constructed based on resources corresponding to the plurality of types in the computing device cluster 100. It should be noted that the cloud service described in this application includes any type of service deployed on a cloud at any granularity, for example, may be a microservice (microservice) at a small granularity, or may be a service constructed based on a plurality of microservices at a large granularity.

In actual application, there may be a requirement for updating resource configuration of the cloud service provided by the computing device cluster 100. For example, version upgrade needs to be performed on the cloud service. In this case, a resource configuration system 200 may update the resource configuration of the cloud service to a resource required by a cloud service of a new version. During specific implementation, the resource configuration system 200 may provide a client 301 externally. The client 301 may be, for example, a web browser, or may be an application (application) running on a user terminal, and is configured to interact with a user 302. For example, the resource configuration system 200 may obtain, through the client 301, final configuration defined by the user 302 for a resource of the to-be-upgraded cloud service. In addition, the resource configuration system 200 further establishes a communication connection to the computing device cluster 100, for example, may establish a communication connection in a wired or wireless manner, and updates the resource configuration of the cloud service in the computing device cluster 100 to the final configuration defined by the user 302.

If the resource configuration system 200 directly performs, based on the final configuration defined by the user 302, a final modification on a K8S resource that can be allocated to the cloud service, the resource configuration system 200 usually directly creates the cloud service of the new version in the computing device cluster 100, and deletes a cloud service of an earlier version. In this way, the version of the cloud service and the resource configuration are updated. In this way, in a process of updating the resource configuration of the cloud service, the cloud service of the new version and the cloud service of the earlier version do not coexist in the computing device cluster 100. Therefore, the resource configuration system 200 can implement only rolling upgrade of the cloud service. An upgrade manner in which resource configuration of a cloud service is modified for a plurality of times in one upgrade process is not supported. For example, gray upgrade and batch rolling upgrade are not supported. Therefore, an upgrade manner of the cloud service is limited, and user experience is reduced.

Based on this, the resource configuration system 200 provided in this embodiment of this application is intended to support an upgrade manner in which resource configuration of a cloud service can be modified for a plurality of times in one upgrade process, to get rid of a limitation of the upgrade manner of the cloud service, and improve user experience.

During specific implementation, as shown in FIG. 1, the resource configuration system 200 may include an interaction module 201, a creation module 202, and a traffic management module 203. The interaction module 201 is configured to: obtain configuration information provided by a user, where the configuration information is used to describe a plurality of resources configured for a first cloud service (for example, a cloud service of an earlier version); and provide the configuration information for the creation module 202. The creation module 202 is configured to: create a second cloud service (for example, a cloud service of a new version) based on the configuration information and an original resource allocated to the first cloud service, where the second cloud service and the first cloud service share an environment type resource, and a workload type resource of the second cloud service and a workload type resource of the first cloud service are isolated from each other; and indicate the traffic management module 203 that the second cloud service is created. The traffic management module 203 is configured to migrate traffic on the first cloud service to the second cloud service based on a target deployment policy, to update a resource configuration of the cloud service, so that the updated second cloud service continues to provide a service by using the resource configuration.

Because the created second cloud service and the first cloud service share the environment type resource, and the workload type resources of the two cloud services are isolated from each other, the first cloud service and the second cloud service can coexist in a process of updating resource configuration of the cloud service. Therefore, based on the two coexisting cloud services, the traffic on the first cloud service can be migrated to the second cloud service in a manner such as gray deployment or batch rolling deployment. That is, a higher order update manner such as gray deployment or batch rolling deployment can be supported to update the resource configuration of the cloud service.

In addition, one final configuration modification process for the cloud service may cover resources of a plurality of functions corresponding to the cloud service. There is no need to separately perform one final configuration modification process for a resource of each function, so that efficiency of updating, by the resource configuration system 200, the resource configuration corresponding to the cloud service can be improved.

When the resource configuration system 200 is deployed independently of the computing device cluster 100, the resource configuration system 200 may be simultaneously connected to a plurality of computing device clusters 100. In this way, based on one resource configuration system, an update process of managing a resource configuration of a cloud service for the plurality of computing device clusters 100 may be implemented. There is no need to separately dispose the resource configuration system 200 in each computing device cluster 100 to manage the resource configuration process of the cloud service. This can not only reduce overall resource occupation consumption and reduce complexity of operation and maintenance management, but also avoid resource occupation of the computing device cluster 100 and reduce impact on performance of the computing device cluster 100.

It should be noted that a specific structure of the resource configuration system 200 shown in FIG. 1 is merely used as an implementation example. In another possible implementation, the resource configuration system 200 may further include modules with more other functions. Alternatively, function division of the modules in the resource configuration system 200 is not limited to the example shown in FIG. 1. For example, a plurality of modules in the resource configuration system 200 may be combined into one module, or the creation module 202, the traffic management module 203, and the like in the resource configuration system 200 may be split into a plurality of modules. A specific structure of the resource configuration system 200 is not limited in this embodiment and is limited to the example shown in FIG. 1. In addition, in another application scenario, the resource configuration system 200 may alternatively be deployed inside the computing device cluster 100, so that the resource configuration system 200 can independently manage the resource configuration update process of the cloud service for the computing device cluster 100. The computing device cluster 100 may alternatively be replaced with another type of cluster or the like.

In some examples, the resource configuration system 200 may be deployed on the cloud, and is configured to update the resource configuration of the cloud service for the user 302. In this case, the resource configuration system 200 may be implemented, for example, by a computing device or a computing device cluster on the cloud. Alternatively, the resource configuration system 200 may be deployed on a user side, so that the user 302 can request to update the resource configuration of the cloud service on the user side.

In actual application, the functional modules in the resource configuration system 200 may be implemented by using software, or may be implemented by using hardware.

Each functional module in the resource configuration system 200 is used as an example of a software functional unit, and may include code running on a compute instance. The computing instance may include at least one of a host, a virtual machine, and a container. Further, there may be one or more computing instances. For example, each functional module in the resource configuration system 200 may include code running on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

Each functional module in the resource configuration system 200 is used as an example of a hardware functional unit. The resource configuration system 200 may include at least one computing device, for example, a server. Each functional module in the resource configuration system 200 may be implemented by one or more computing devices. Alternatively, each functional module in the resource configuration system 200 may be implemented by using an application-specific integrated circuit (application-specific integrated circuit, ASIC), a device implemented by using a programmable logic device (programmable logic device, PLD), or the like. The PLD may be a complex program logic device (complex programmable logical device, CPLD), a field programmable gate array (field-programmable gate array, FPGA), generic array logic (generic array logic, GAL), a data processing unit (data processing unit, DPU), an artificial intelligence (artificial intelligence, AI) chip, or any combination thereof.

The plurality of computing devices included in the resource configuration system 200 may be distributed in a same region, or may be distributed in different regions. The plurality of computing devices included in the resource configuration system 200 may be distributed in a same AZ, or may be distributed in different AZs. Similarly, a plurality of computing devices included in the resource configuration system 200 may be distributed in a same VPC, or may be distributed in a plurality of VPCs. The plurality of computing devices included in the resource configuration system 200 may be any combination of computing devices such as a server, an ASIC, a PLD, a CPLD, an FPGA, and a GAL.

The following describes in detail various non-limiting specific implementations of the resource configuration update process.

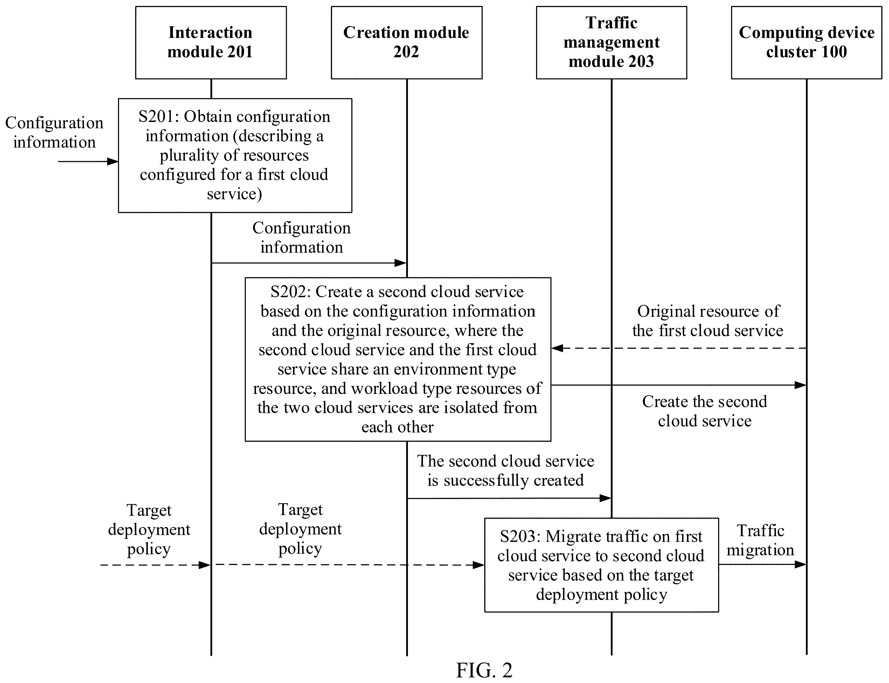

FIG. 2 is a schematic flowchart of a resource configuration method according to an embodiment of this application. The method may be applied to the application scenario shown in FIG. 1, or may be applied to another applicable application scenario. The following uses an example in which the method is applied to the application scenario shown in FIG. 1 for description.

The resource configuration method shown in FIG. 2 may specifically include the following steps.

S201: An interaction module 201 obtains configuration information provided by a user 302, where the configuration information is used to describe a plurality of resources configured for a first cloud service.

In a version upgrade scenario, the user 302 may need to upgrade a version of a cloud service provided in a computing device cluster 100, and reconfigure a resource of a cloud service, for example, change a communication protocol used by a cloud service of a new version from a communication protocol A to a communication protocol B (the communication protocol A is a communication protocol used by the cloud service of an old version). Alternatively, in a cloud service operation and maintenance scenario, the user 302 may need to improve performance of the cloud service. Specifically, a resource may be added (or a resource may be modified) based on original resource configuration of the cloud service. For example, a plurality of processes may be added to the cloud service to improve a response speed of the cloud service.

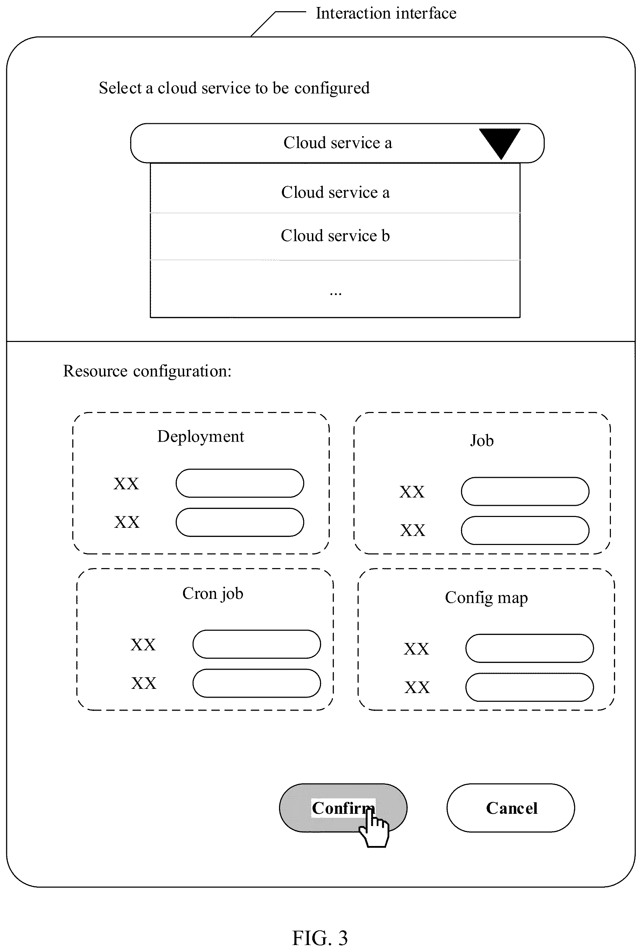

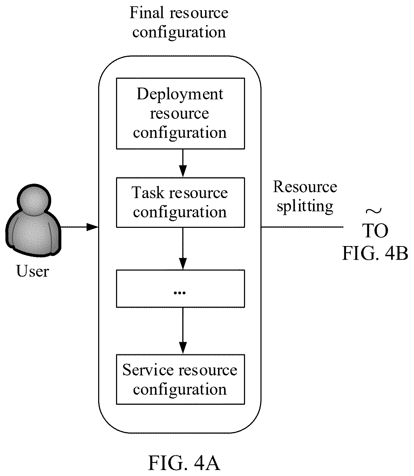

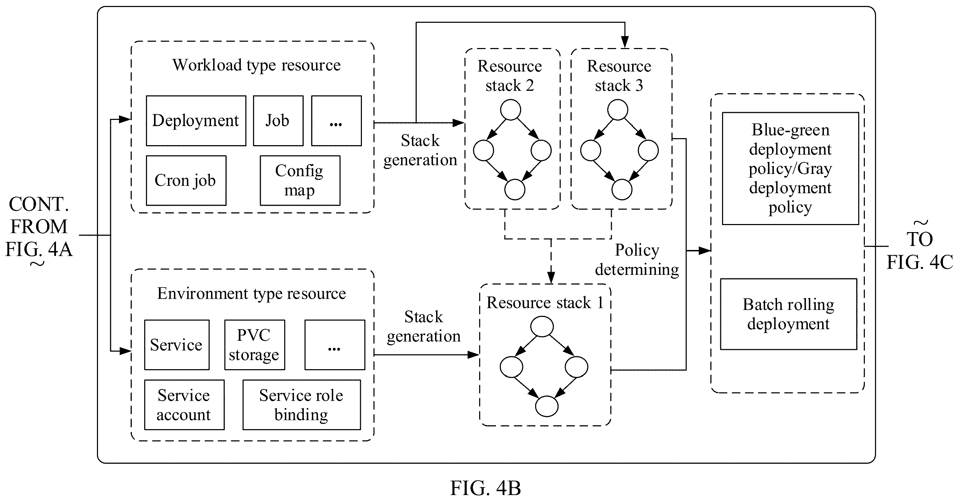

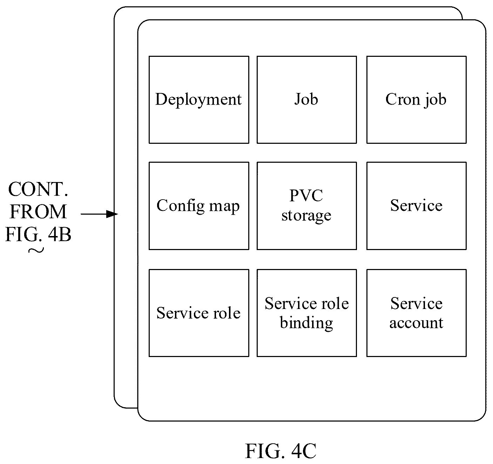

In an implementation example, a client 301 provided by a resource configuration system 200 externally may present an interaction interface, for example, may be an interaction interface shown in FIG. 3, to the user 302. Identifiers of a plurality of cloud services running in the computing device cluster 100 are displayed on the interaction interface. In this way, the user 302 may select at least one cloud service from the plurality of cloud services to update a resource configuration of the cloud service. It is assumed that the user 302 selects to update a resource configuration of a first cloud service in the plurality of cloud services. In addition, after selecting the first cloud service, the user may further perform final configuration on a resource of the first cloud service on the interaction interface shown in FIG. 3, for example, may configure a deployment type resource, a job type resource, a cron job type resource, and a config map type resource that correspond to the first cloud service. In this way, the client 301 generates configuration information for the first cloud service based on a configuration operation performed by the user 302. The configuration information is used to describe the plurality of resources configured by the user 302 for the first cloud service, as shown in FIG. 4A to FIG. 4C. Then, the client 301 may send the generated configuration information to the interaction module 201.

In another implementation example, the user 302 may alternatively precompile a configuration file for the first cloud service. The configuration file defines information used to describe the plurality of resources configured for the first cloud service, so that the user 302 can upload the configuration file on the client 301. The client 301 forwards the configuration file to the interaction module 201.

Then, the interaction module 201 may provide the configuration information (or the configuration file) for the creation module 202.

S202: The creation module 202 creates a second cloud service based on the configuration information and an original resource allocated to the first cloud service, where the second cloud service and the first cloud service share an environment type resource, and a workload type resource of the second cloud service is isolated from a workload type resource of the first cloud service.

In this embodiment, the creation module 202 may create two cloud services in the computing device cluster 100. One cloud service is the first cloud service used before the resource configuration is updated, and the other cloud service is the second cloud service used after the resource configuration is updated. For example, the first cloud service and the second cloud service may be cloud services of different versions of a same type in an upgrade scenario; or the first cloud service and the second cloud service may be cloud services of a same version (with different configurations) in an operation and maintenance scenario, or may be cloud services of different types, or the like. In a process of updating the resource configuration of the cloud service, the two cloud services may coexist in the computing device cluster 100.

The creation module 202 may create the second cloud service based on an environment type resource included in the original resource allocated to the first cloud service. In this way, the first cloud service and the second cloud service may share the environment type resource. In addition, the workload type resources that are allocated to the first cloud service and the second cloud service are isolated from each other, so that both the first cloud service and the second cloud service can run normally.

In a possible implementation, the creation module 202 may split the configuration information based on a resource type, to obtain first configuration information used to describe the environment type resource and second configuration information used to describe the workload type resource. The environment type resource may include, for example, a resource of a type such as PVC storage, service (service)/ingress (ingress) network configuration, or RBAC authentication on which the workload depends, as shown in FIG. 4A to FIG. 4C. The workload type resource may be, for example, a resource of a type such as deployment (deployment), job (job), cron job (cron job), config map (config map), or secret (secret), as shown in FIG. 4A to FIG. 4C. A workload (workload) is an application program running on the computing device cluster 100 (for example, Kubernetes).

Then, the creation module 202 obtains, from the computing device cluster 100 or a local cache, the original resource allocated to the first cloud service, and determines the first resource based on the first configuration information and the original resource. The first resource is the environment type resource that is described in the first configuration information and that is not included in the original resource. For example, it is assumed that the original resource allocated to the first cloud service includes a port a and a port b, and the resource configured for the to-be-created second cloud service includes the port b and a port c. In this case, the creation module 202 may compare the first configuration information with the original resource, and may determine that the first resource is the port c that is not included in the original resource. In this way, the first resource and the environment type resource included in the original resource corresponding to the first cloud service can be combined to meet a requirement of the to-be-created second cloud service for the environment type resource. Generally, the original resource allocated to the first cloud service includes the environment type resource and the workload type resource, and the workload type resource is used to support running of a workload included in the first cloud service.

In addition, the creation module 202 further determines a second resource based on the second configuration information, where the second resource is the workload type resource described in the second configuration information. The second resource is isolated from the workload type resource in the original resource. In this way, the workload included in the first cloud service and a workload included in the to-be-generated second cloud service can run independently of each other. For example, it is assumed that the original resource allocated to the first cloud service includes a process set a. The process set a includes a process 1, a process 2, and a process 3. The three processes are workload type resources. The creation module 202 may schedule the second resource for the second cloud service. The second resource may be a process set b. The process set b includes a process 4, a process 5, and a process 6. The process set a of the first cloud service and the process set b of the second cloud service can run independently of each other.

In this way, the creation module 202 may create the second cloud service based on the original resource (which may be specifically the environment type resource included in the original resource) allocated to the first cloud service, the first resource, and the second resource. In this case, the created second cloud service and the first cloud service share the environment type resource, and the workload type resources corresponding to the two cloud services are isolated from each other. In this way, the first cloud service and the second cloud service may simultaneously run in the computing device cluster 100.

In actual application, two resource stacks may be configured for the first cloud service: a resource stack 1 and a resource stack 2. The resource stack 1 is used to record the environment type resource in the original resource, and the resource stack 2 is used to record the workload type resource in the original resource, as shown in FIG. 4A to FIG. 4C. In this embodiment, recording a resource by using a resource stack may specifically mean storing, by using the resource stack, an identifier (for example, an identifier of the environment type resource or an identifier of the workload type resource) corresponding to the resource. The resource stack 1 and the resource stack 2 may be created by the resource configuration system 200 when the first cloud service is created, and the first cloud service is associated with the two resource stacks. On this basis, in a process of updating the resource configuration for the first cloud service, the creation module 202 may record the determined first resource by using the resource stack 1 associated with the first cloud service. In this way, based on the original resource currently allocated to the first cloud service and the environment type resource recorded in the resource stack 1, a requirement of the to-be-created second cloud service for the environment type resource can be supported. In addition, the creation module 202 may further create a resource stack 3 for the to-be-created second cloud service, and the resource stack 3 and the resource stack 2 are isolated from each other. After determining the second resource, the creation module 202 may record the second resource by using the newly created resource stack 3, as shown in FIG. 4A to FIG. 4C. In this way, the workload type resource recorded in the newly created resource stack 3 may support a requirement of the to-be-created second cloud service for the workload type resource. Then, the creation module 202 may generate, for the second cloud service based on the environment type resource recorded in the resource stack 1, the environment type resource currently configured for the first cloud service, and a dependency relationship between different environment type resources, an execution plan configured for the environment type resource, for example, an execution plan 1 in a form of a directed acyclic graph (directed acyclic graph, DAG). Therefore, the environment type resource may be configured for the second cloud service based on the execution plan 1. For example, the created resource may be allocated to the second cloud service based on the execution plan 1. Alternatively, a new resource may be created for the second cloud service based on the execution plan 1. In addition, the creation module 202 may generate, for the second cloud service based on the workload type resource and a dependency relationship between different workload type resources that are recorded in the resource stack 3, the execution plan 2 configured for the workload type resource, to configure the workload type resource for the second cloud service based on the execution plan 2. Further, the creation module 202 may create the second cloud service based on the configured environment type resource and workload type resource.

In some scenarios, there may be a strong dependency relationship between the plurality of resources described by the configuration information provided by the user 302. Therefore, it is difficult for the workload of the second cloud service created by the creation module 202 and the workload of the first cloud service to meet a feature of mutual isolation. Alternatively, the environment type resource described in the configuration information is deletion, modification, or the like of some resources based on the environment type resource allocated to the first cloud service. As a result, the first cloud service cannot coexist with the second cloud service due to a change of the environment type resource. Therefore, in a further possible implementation, after obtaining the configuration information provided by the user 302, the creation module 202 may check whether the configuration information meets a preset deployment condition. For example, whether a reference relationship between the plurality of resources described in the configuration information meets the deployment condition is checked, whether incremental configuration is performed on the environment type information described by the configuration information based on the environment type resource of the first cloud service is checked, and the like. When determining that the configuration information meets the deployment condition, the creation module 202 creates, based on the configuration information, the second cloud service that coexists with the first cloud service. When the configuration information does not meet the deployment condition, the creation module 202 may stop a process of updating the resource configuration of the cloud service, and may send a configuration error alarm to the user 302 through the client 301.

S203: A traffic management module 203 migrates traffic on the first cloud service to the second cloud service based on a target deployment policy.

After the first cloud service and the second cloud service are created, the first cloud service and the second cloud service may coexist in the computing device cluster 100. In this case, the target deployment policy used by the management module 203 in the process of migrating the traffic running on the first cloud service traffic to the second cloud service may be, for example, a high-level deployment policy (relative to a rolling deployment policy) such as a blue-green deployment policy, a gray deployment policy, or a batch rolling deployment policy, as shown in FIG. 4A to FIG. 4C. In a process of migrating the traffic on the first cloud service based on the gray deployment policy, the traffic management module 203 may gradually migrate the traffic on the first cloud service to the second cloud service based on a specified proportion, and may specifically migrate the traffic to a workload included in the second cloud service. In a process of migrating the traffic on the first cloud service based on the batch rolling deployment policy, the traffic management module 203 may reduce, in batches based on batch information defined by a user, pods (pod) included in the first cloud service, and create a corresponding quantity of pods for the second cloud service. In this way, traffic on the first cloud service is gradually migrated to a corresponding pod in the second cloud service. In this way, the resource configuration system 200 may support a plurality of resource configuration modification deployment manners of the cloud service in one final configuration process, to get rid of a limitation of a resource deployment manner of the cloud service, and improve user experience. In addition, the resource configuration system 200 may also support another deployment manner such as the blue-green deployment policy or the rolling deployment policy, so that diversity of deployment manners supported by the resource configuration system 200 can be improved.

In addition, because the first cloud service and the second cloud service coexist in the computing device cluster 100, in a process of updating the resource configuration of the cloud service, the first cloud service and the second cloud service may collaborate to continuously provide the cloud service. In this way, resource configuration of the cloud service can be updated without interrupting the cloud service.

For ease of understanding, with reference to the accompanying drawings, the following separately describes, by using examples, a process in which the traffic management module 203 migrates the traffic on the first cloud service to the second cloud service based on the gray deployment policy and the batch rolling deployment policy.

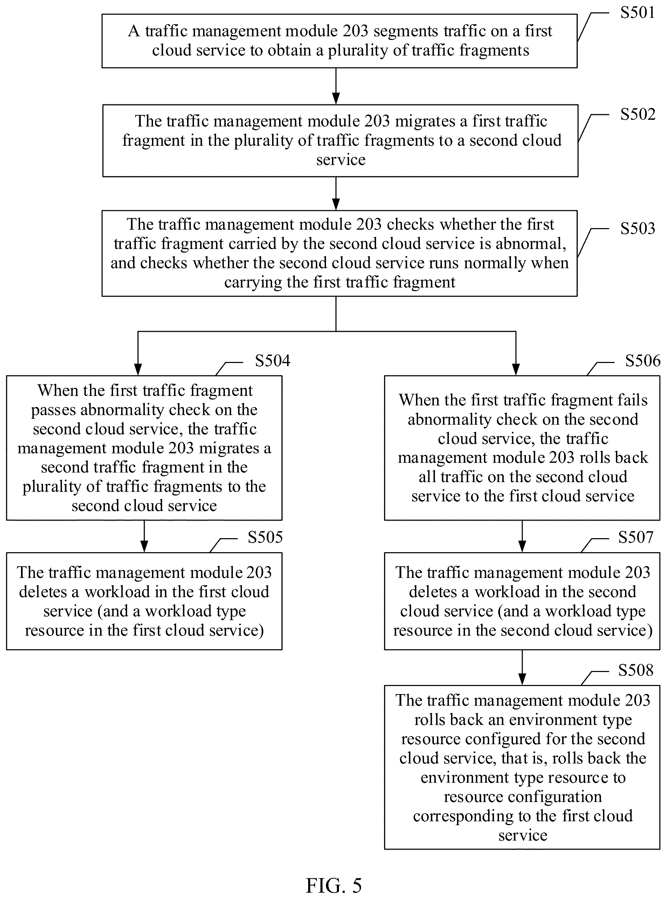

FIG. 5 is a schematic flowchart of performing traffic migration by the traffic management module 203 based on the gray deployment policy. As shown in FIG. 5, the traffic migration process may specifically include the following steps.

S501: The traffic management module 203 segments traffic on the first cloud service to obtain a plurality of traffic fragments.

Each traffic fragment is a part of the traffic on the first cloud service, for example, may be traffic of some types of services, or may be traffic of some users.

In actual application, the traffic management module 203 may segment the traffic on the first cloud service into a plurality of traffic fragments with a same proportion or different proportions based on a preset traffic proportion. For example, the traffic management module 203 may segment, based on a same traffic proportion, the traffic on the first cloud service into four traffic fragments whose proportions are all 25%. Alternatively, the traffic management module 203 may segment, based on different traffic proportions, the traffic on the first cloud service into traffic fragments whose proportions are respectively 10%, 20%, 30%, and 40%. This is not limited in this embodiment.

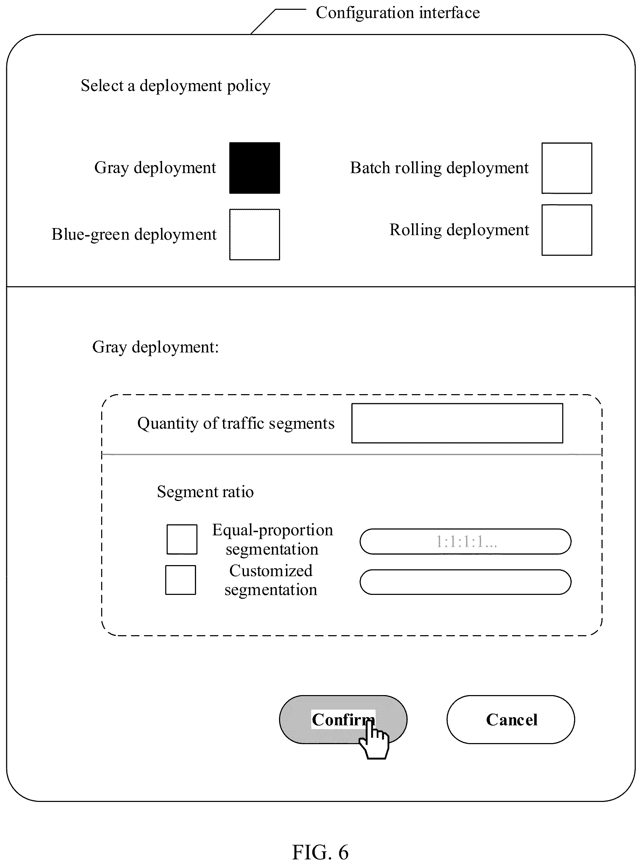

The preset traffic proportion may be specified by the user 302. For example, the client 301 may present, to the user 302, a configuration interface for the target deployment policy, for example, may be a configuration interface shown in FIG. 6. A plurality of deployment policies supported by the resource configuration system 200 may be presented on the configuration interface, for example, the gray deployment policy, the blue-green deployment policy, the rolling deployment policy, and the batch rolling deployment policy in FIG. 6. Therefore, the user 302 may select the target deployment policy on the configuration interface. In addition, when the user 302 selects the gray deployment policy, the configuration interface may further present a quantity of segments and a segment proportion of the traffic on the first cloud service. Correspondingly, the user 302 may specify, on the configuration interface, the quantity of traffic segments, and select an equal-proportion segmentation manner to perform equal-proportion segmentation on the traffic, or select a customized segmentation manner. The user 302 defines a proportion of segmentation performed on the traffic, and enters a proportion of each traffic fragment. Then, the client 301 may provide the resource configuration system 200 with the traffic proportion specified by the user 302. In actual application, the traffic management module 203 may also customize a traffic proportion or the like based on a type of traffic on the first cloud service or another factor. This is not limited in this embodiment.

S502: The traffic management module 203 migrates a first traffic fragment in the plurality of traffic fragments to the second cloud service.

In the gray deployment manner provided by the resource configuration system 200, when creating the second cloud service, the creation module 202 may simultaneously allocate a plurality of pods to the second cloud service (a quantity of pods is determined based on the configuration information provided by the user 302). In this way, the traffic management module 203 may directly migrate each traffic fragment on the first cloud service to a corresponding pod in the second cloud service, and the pod processes the traffic fragment.

S503: The traffic management module 203 checks whether the first traffic fragment carried by the second cloud service is abnormal, and checks whether the second cloud service runs normally when carrying the first traffic fragment.

S504: When the first traffic fragment passes abnormality check on the second cloud service, the traffic management module 203 migrates a second traffic fragment in the plurality of traffic fragments to the second cloud service.

S505: The traffic management module 203 deletes a workload in the first cloud service (and a workload type resource in the first cloud service).

S506: When the first traffic fragment fails abnormality check on the second cloud service, the traffic management module 203 rolls back all traffic on the second cloud service to the first cloud service.

S507: The traffic management module 203 deletes a workload in the second cloud service (and a workload type resource in the second cloud service).

S508: The traffic management module 203 rolls back the environment type resource configured for the second cloud service, that is, rolls back the environment type resource to the resource configuration corresponding to the first cloud service.

In the gray deployment policy, after migrating a part of the traffic (that is, the first traffic fragment) on the first cloud service to the second cloud service, the traffic management module 203 checks whether the part of traffic is abnormal on the second cloud service, for example, determines whether an abnormality such as traffic congestion or an excessively long traffic processing delay occurs. In addition, the traffic management module 203 also checks whether a running abnormality occurs in a process in which the second cloud service carries the part of the traffic, for example, determines whether an abnormality such as a running error or a resource insufficiency alarm occurs.

If an abnormality does not occur after the second cloud service carries the migrated traffic, the traffic management module 203 may continue to migrate a next part of the traffic (namely, the second traffic fragment) on the first cloud service to the second cloud service, and check whether an abnormality occurs when the second cloud service continues to carry the second traffic fragment. If the abnormality still does not occur, the traffic management module 203 may sequentially migrate, according to the foregoing process, remaining traffic on the first cloud service to the second cloud service, until all traffic on the first cloud service is migrated to the second cloud service, to implement (version upgrade and) resource configuration update on the cloud service. In this case, the workload in the first cloud service may not need to continue to run. Therefore, the traffic management module 203 may delete the workload in the first cloud service, and also delete a workload type resource occupied by the workload, to release a resource in the computing device cluster 100, and avoid a resource waste as much as possible. In actual application, the traffic management module 203 may further notify, through the client 301, the user 302 that the resource configuration for the cloud service is successfully updated this time.

If the abnormality occurs in a process in which the second cloud service carries any one of the plurality of traffic fragments, the traffic management module 203 may roll back all traffic on the second cloud service to the first cloud service, to ensure that the cloud service provided by the computing device cluster 100 is not interrupted. This avoids impact on a service of the user 302. Further, the traffic management module 203 may delete the workload of the second cloud service, delete the workload type resource in the second cloud service, and roll back the environment type resource configured for the second cloud service, to release the resource in the computing device cluster 100 and avoid the resource waste as much as possible. In actual application, the traffic management module 203 may further notify, through the client 301, the user 302 that the resource configuration for the cloud service fails to be updated this time.

In this way, in comparison with native rolling deployment of the computing device cluster 100, the gray deployment manner supported by the traffic management module 203 implements more flexible and configurable traffic migration control, and has a fast rollback capability, so that efficiency and security of changing the resource configuration of the cloud service can be improved.

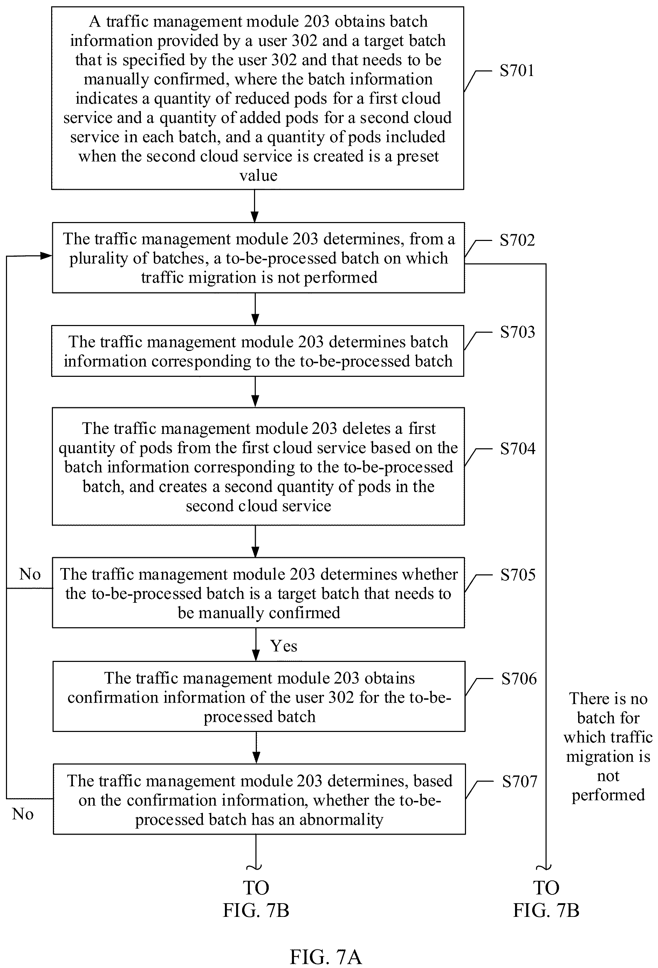

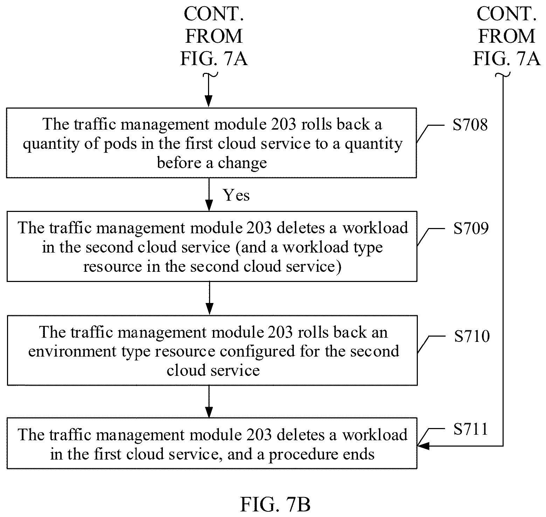

FIG. 7A and FIG. 7B are a schematic flowchart of performing traffic migration by the traffic management module 203 based on the batch rolling deployment policy. As shown in FIG. 7A and FIG. 7B, the traffic migration process may specifically include the following steps.

S701: The traffic management module 203 obtains batch information provided by the user 302 and a target batch that is specified by the user 302 and that needs to be manually confirmed, where the batch information indicates a quantity of reduced pods for the first cloud service and a quantity of added pods for the second cloud service in each batch, and a quantity of pods included when the second cloud service is created is a preset value.

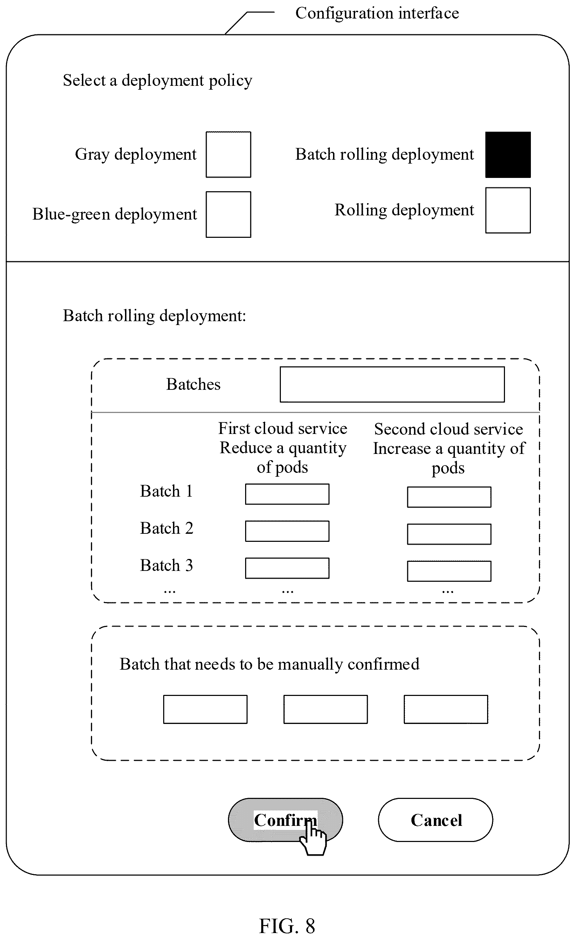

For example, the client 301 may present a configuration interface for the target deployment policy to the user 302. For example, the configuration interface may be a configuration interface shown in FIG. 8. The configuration interface may present the plurality of deployment policies such as the gray deployment policy, the blue-green deployment policy, the rolling deployment policy, and the batch rolling deployment policy that are supported by the resource configuration system 200, so that the user 302 may select the batch rolling deployment policy on the configuration interface. In this case, the user 302 may further configure, on the configuration interface, batching logic for the first cloud service, including a total quantity of batches obtained by dividing the quantity of pods included in the first cloud service, the quantity of pods that need to be reduced in the first cloud service, and the quantity of pods that need to be added in the second cloud service in each batch, as shown in FIG. 8. It may be understood that the traffic on the first cloud service is carried by a pod in the first cloud service. Therefore, in each traffic migration batch, when some pods in the first cloud service are deleted and a pod is created for the second cloud service, traffic carried by a deleted pod in the first cloud service is migrated to a pod created in the second cloud service. In addition, when setting a traffic migration batch, the user 302 may further set a target batch (which may be some or all batches) that needs to be manually confirmed, as shown in FIG. 8. In this way, when traffic corresponding to the target batch is migrated from the first cloud service to the second cloud service, the user 302 (or an operation and maintenance personnel) needs to manually confirm a traffic migration result of the target batch, and continue to migrate traffic of a next batch only when manual confirmation is obtained.

It should be noted that, before creating the second cloud service, the interaction module 201 may obtain, in advance, the batch information provided by the user 302 and the target batch specified by the user 302. For example, before obtaining the configuration information provided by the user 302, the interaction module 201 may first obtain the batch information provided by the user 302 and the specified target batch. Alternatively, the user 302 may enter the configuration information, the batch information, the target batch, and the like on a same interaction interface. This is not limited in this embodiment. Then, the interaction module 201 provides the batch information and the target batch to the traffic management module 203.

In a batch rolling deployment scenario, the second cloud service created by the creation module 202 based on the configuration information may include a preset quantity of pods. The preset quantity may be 0. In other words, the second cloud service with an empty workload is created. Alternatively, the preset quantity may be another value. This is not limited.

S702: The traffic management module 203 determines, from the plurality of batches, a to-be-processed batch on which traffic migration is not performed. If there is no batch on which traffic migration is not performed, step S711 is directly performed.

In this embodiment, the to-be-processed batch is used to indicate a batch currently selected for traffic migration. After traffic migration is completed in a current batch, the traffic management module 203 may continue to select a batch from remaining batches in which traffic migration is not completed as a to-be-processed batch, and start to perform step S703 and subsequent steps.

S703: The traffic management module 203 determines the batch information corresponding to the to-be-processed batch.

S704: The traffic management module 203 deletes a first quantity of pods from the first cloud service based on the batch information corresponding to the to-be-processed batch, and creates a second quantity of pods in the second cloud service.

S705: The traffic management module 203 determines whether the to-be-processed batch is a target batch that needs to be manually confirmed. If the to-be-processed batch is the target batch that needs to be manually confirmed, step S706 is performed. If the to-be-processed batch is not the target batch that needs to be manually confirmed, step S702 is performed.

S706: The traffic management module 203 obtains the confirmation information of the user 302 for the to-be-processed batch.

In actual application, when the second cloud service carries the traffic of the to-be-processed batch, the traffic management module 203 may present a confirmation interface to the user 301 through the client 301, and present, on the confirmation interface, running data obtained when the second cloud service processes the traffic of the to-be-processed batch. In this way, the user 302 may determine, based on the presented running data analysis, whether there is an abnormality when the second cloud service carries the traffic of the to-be-processed batch, and enter the confirmation information for the target batch on the confirmation interface. Finally, the client 301 provides the confirmation information for the traffic management module 203.

S707: The traffic management module 203 determines, based on the confirmation information, whether the to-be-processed batch has an abnormality. If the to-be-processed batch does not have the abnormality, step S702 is performed. If the to-be-processed batch has the abnormality, S708 is performed.

S708: The traffic management module 203 rolls back a quantity of pods in the first cloud service to a quantity before the change.

S709: The traffic management module 203 deletes a workload in the second cloud service (and a workload type resource in the second cloud service).

S710: The traffic management module 203 rolls back the environment type resource configured for the second cloud service, that is, rolls back the environment type resource to the resource configuration corresponding to the first cloud service.

S711: The traffic management module 203 deletes a workload in the first cloud service, and a procedure ends.

In this embodiment, the traffic management module 203 may migrate the traffic on the first cloud service to the second cloud service with reference to manual confirmation information of the user 302 for some or all batches, or perform rollback when the abnormality occurs during traffic migration of some batches. This provides stronger pre-change planning and in-change control capabilities than native rolling deployment of the compute device cluster 100. In other words, a quantity of batches, a quantity of pods involved in each batch, and a manual intervention occasion may be planned in advance. In this way, in a process of changing the resource configuration of the cloud service, a resource configuration change may be suspended at any time and manually confirmed, to ensure controllability and security of the resource configuration change.

In another embodiment, in a process in which the traffic management module 203 migrates the traffic on the first cloud service to the second cloud service in batches, a manual confirmation process may not need to be performed. In other words, the traffic management module 203 may automatically gradually migrate the traffic on the first cloud service in the plurality of batches to the second cloud service.

In the embodiments shown in FIG. 2, FIG. 5, and FIG. 7A and FIG. 7B, a resource configuration system (including the interaction module 201, the creation module 202, and the traffic management module 203) involved in a resource configuration process may be software configured on a computing device or a computing device cluster. The software runs on the computing device or the computing device cluster, so that the computing device or the computing device cluster can implement a function of the resource configuration system 200. The following describes in detail a resource configuration system 200 in a resource configuration process from a perspective of hardware device implementation.

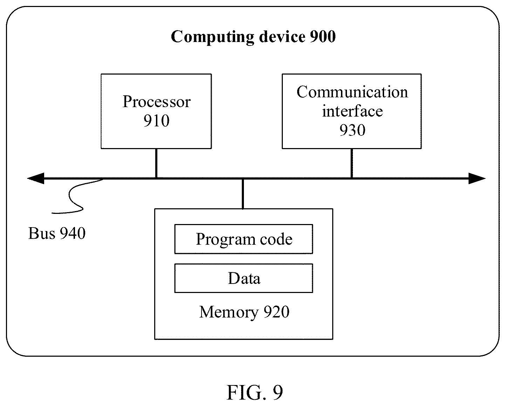

FIG. 9 is a diagram of a structure of a computing device. The resource configuration system 200 may be deployed on the computing device. The computing device may be a computing device (for example, a server) in a cloud environment, a computing device in an edge environment, a terminal device, or the like that may be specifically configured to implement functions of the interaction module 201, the creation module 202, and the traffic management module 203 in the embodiments shown in FIG. 2, FIG. 5, and FIG. 7A and FIG. 7B.

As shown in FIG. 9, a computing device 900 includes a processor 910, a memory 920, a communication interface 930, and a bus 940. The processor 910, the memory 920, and the communication interface 930 communicate with each other through the bus 940. The bus 940 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is used to represent the bus in FIG. 9, but this does not mean that there is only one bus or only one type of bus. The communication interface 930 is configured to communicate with the outside, for example, receive configuration information and batch information provided by a user.

The processor 910 may be a central processing unit (central processing unit, CPU), an application specific integrated circuit (application specific integrated circuit, ASIC), a graphics processing unit (graphics processing unit, GPU), or one or more integrated circuits. The processor 910 may alternatively be an integrated circuit chip and has a signal processing capability. In an implementation process, functions of each module in the resource configuration system 200 may be completed by using an integrated logic circuit of hardware in the processor 910 or instructions in a form of software. The processor 910 may alternatively be a general-purpose processor, a data signal processor (digital signal processor, DSP), a field programmable gate array (field programmable gate array, FPGA) or another programmable logic device, a discrete gate or a transistor logic device, or a discrete hardware component, and may implement or perform the methods, steps, and logical block diagrams disclosed in embodiments of this application. The general-purpose processor may be a microprocessor, or the processor may be any conventional processor, or the like. The methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 920. The processor 910 reads information in the memory 920, and completes some or all functions of the resource configuration system 200 in combination with hardware of the processor 910.

The memory 920 may include a volatile memory (volatile memory), for example, a random access memory (random access memory, RAM). The memory 920 may further include a non-volatile memory (non-volatile memory), for example, a read-only memory (read-only memory, ROM), a flash memory, an HDD, or an SSD.

The memory 920 stores executable code, and the processor 910 executes the executable code to perform the method performed by the resource configuration system 200 (specifically, the modules in the resource configuration system 200).

Specifically, when the embodiments shown in FIG. 2, FIG. 5, and FIG. 7A and FIG. 7B are implemented, and the interaction module 201, the creation module 202, and the traffic management module 203 described in the embodiments shown in FIG. 2, FIG. 5, and FIG. 7A and FIG. 7B are implemented by using software, software or program code required for performing functions of the interaction module 201, the creation module 202, and the traffic management module 203 in FIG. 2, FIG. 5, and FIG. 7A and FIG. 7B is stored in the memory 920. Interaction between the interaction module 201 and another device is implemented by using the communication interface 930. The processor is configured to execute the instructions in the memory 920, to implement the method performed by the resource configuration system 200.

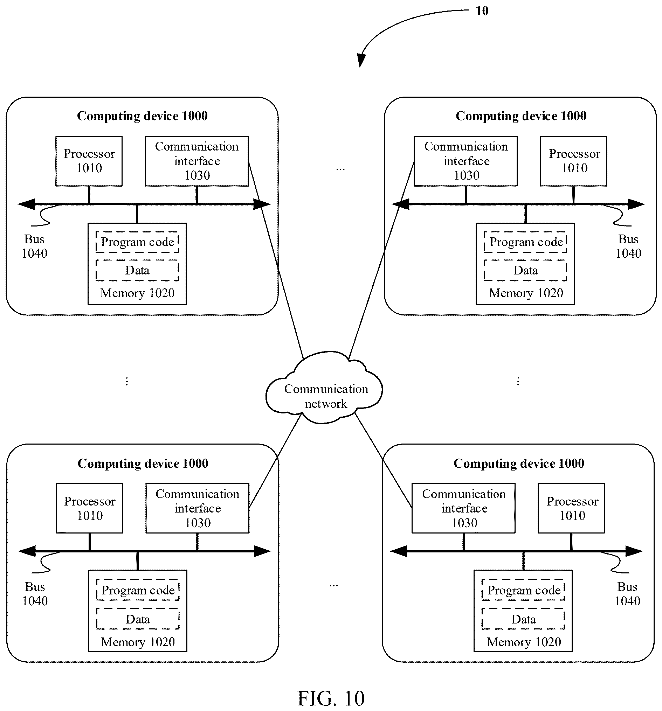

FIG. 10 is a diagram of a structure of a computing device cluster. The computing device cluster 10 shown in FIG. 10 includes a plurality of computing devices, and the resource configuration system 200 may be deployed on the plurality of computing devices in the computing device cluster 10 in a distributed manner. As shown in FIG. 10, the computing device cluster 10 includes a plurality of computing devices 1000. Each computing device 1000 includes a memory 1020, a processor 1010, a communication interface 1030, and a bus 1040. The memory 1020, the processor 1010, and the communication interface 1030 implement mutual communication connections through the bus 1040.

The processor 1010 may be a CPU, a GPU, an ASIC, or one or more integrated circuits. The processor 1010 may be an integrated circuit chip and has a signal processing capability. In an implementation process, some functions of the resource configuration system 200 may be implemented by using an integrated logic circuit of hardware in the processor 1010 or instructions in a form of software. The processor 1010 may alternatively be a DSP, an FPGA, a general-purpose processor, another programmable logic device, a discrete gate or a transistor logic device, or a discrete hardware component, and may implement or perform some of the methods, steps, and logical block diagrams disclosed in embodiments of this application. The general-purpose processor may be a microprocessor, or the processor may be any conventional processor, or the like. Steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1020. In each computing device 1000, the processor 1010 reads information in the memory 1020, and may complete some functions of the resource configuration system 200 in combination with hardware of the processor 1010.

The memory 1020 may include a ROM, a RAM, a static storage device, a dynamic storage device, a hard disk (for example, an SSD or an HDD), and the like. The memory 1020 may store program code, for example, some or all program code used to implement the interaction module 201, some or all program code used to implement the creation module 202, and some or all program code used to implement the traffic management module 203. For each computing device 1000, when the program code stored in the memory 1020 is executed by the processor 1010, the processor 1010 performs, based on the communication interface 1030, some methods performed by the resource configuration system 200. For example, some computing devices 1000 may be configured to perform the methods performed by the interaction module 201 and the creation module 202. The other computing devices 1000 are configured to perform the method performed by the traffic management module 203. The memory 1020 may further store data, for example, intermediate data or result data generated by the processor 1010 in an execution process, for example, the first configuration information and the second configuration information.

The communication interface 1003 in each computing device 1000 is configured to communicate with the outside, for example, interact with another computing device 1000.

The bus 1040 may be a peripheral component interconnect bus, an extended industry standard architecture bus, or the like. For ease of representation, the bus 1040 in each computing device 1000 in FIG. 10 is represented by using only one thick line, but this does not mean that there is only one bus or only one type of bus.

A communication path is established between the plurality of computing devices 1000 through a communication network, to implement a function of the resource configuration system 200. Any computing device may be a computing device (for example, a server) in a cloud environment, a computing device in an edge environment, or a terminal device.

In addition, an embodiment of this application further provides a computer-readable storage medium. The computer-readable storage medium stores instructions. When the instructions are run on one or more computing devices, the one or more computing devices are enabled to perform the method performed by the modules in the resource configuration system 200 in the foregoing embodiment.

In addition, an embodiment of this application further provides a computer program product. When the computer program product is executed by one or more computing devices, the one or more computing devices perform any one of the foregoing resource configuration methods. The computer program product may be a software installation package. When any one of the foregoing resource configuration methods needs to be used, the computer program product may be downloaded and executed on the computer.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technologies may be implemented in the form of a software product. A computer software product is stored in a readable storage medium, such as a floppy disk, a USB flash drive, a removable hard disk, a ROM, a RAM, a magnetic disk, or an optical disc of a computer, and includes several instructions for enabling a computer device (which may be a personal computer, a training device, a network device, or the like) to perform the methods in various embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

## Claims

1. A resource configuration method, wherein the method comprises:
obtaining configuration information provided by a user, wherein the configuration information is used to describe a plurality of resources configured for a first cloud service;
creating a second cloud service based on the configuration information and an original resource allocated to the first cloud service, wherein the second cloud service and the first cloud service share an environment type resource, and a workload type resource of the second cloud service is isolated from a workload type resource of the first cloud service; and
migrating traffic on the first cloud service to the second cloud service according to a target deployment policy.

2. The method according to claim 1, wherein creating the second cloud service based on the configuration information and the original resource allocated to the first cloud service comprises:
splitting the configuration information to obtain first configuration information used to describe the environment type resource and second configuration information used to describe the workload type resource;
determining a first resource based on the first configuration information and the original resource allocated to the first cloud service, wherein the first resource is the environment type resource that is described in the first configuration information and that is not comprised in the original resource;
determining a second resource, wherein the second resource is the workload type resource described in the second configuration information; and
creating the second cloud service based on the original resource allocated to the first cloud service, the first resource, and the second resource.

3. The method according to claim 2, wherein the first resource and an environment type resource comprised in the original resource are recorded in a same stack, and the second resource and a workload type resource comprised in the original resource are recorded in different stacks.

4. The method according to any one of claims 1 to 3, wherein the target deployment policy comprises a blue-green deployment policy, a gray deployment policy, or a batch rolling deployment policy.

5. The method according to claim 4, wherein the target deployment policy is the gray deployment policy, and migrating the traffic on the first cloud service to the second cloud service according to the target deployment policy comprises:
segmenting the traffic on the first cloud service to obtain a first traffic fragment and a second traffic fragment;
migrating the first traffic fragment to the second cloud service; and
migrating the second traffic fragment to the second cloud service when the first traffic fragment passes abnormality check on the second cloud service.

6. The method according to claim 4, wherein the target deployment policy is the batch rolling deployment policy, and migrating the traffic on the first cloud service to the second cloud service according to the target deployment policy comprises:
obtaining batch information provided by the user, wherein the batch information indicates a quantity of reduced pods of the first cloud service and a quantity of added pods of the second cloud service in each batch, and a quantity of pods comprised when the second cloud service is created is a preset value; and
decreasing, in batches based on the batch information, a quantity of pods comprised in the first cloud service, and increasing the quantity of pods comprised in the second cloud service.

7. The method according to claim 6, wherein decreasing, in batches based on the batch information, the quantity of pods comprised in the first cloud service and increasing the quantity of pods comprised in the second cloud service comprises:
obtaining confirmation information of the user for a target batch, wherein the target batch is one of a plurality of batches indicated by the batch information; and
decreasing, in batches based on the batch information and the confirmation information, the quantity of pods comprised in the first cloud service, and increasing the quantity of pods comprised in the second cloud service.

8. The method according to any one of claims 1 to 7, wherein the first cloud service and the second cloud service belong to cloud services of different versions; or the first cloud service and the second cloud service belong to cloud services of a same version.

9. A resource configuration system, wherein the resource configuration system comprises:
an interaction module, configured to obtain configuration information provided by a user, wherein the configuration information is used to describe a plurality of resources configured for a first cloud service;
a creation module, configured to create a second cloud service based on the configuration information and an original resource allocated to the first cloud service, wherein the second cloud service and the first cloud service share an environment type resource, and a workload type resource of the second cloud service is isolated from a workload type resource of the first cloud service; and
a traffic management module, configured to migrate traffic on the first cloud service to the second cloud service based on a target deployment policy.

10. The system according to claim 9, wherein the creation module is configured to:
split the configuration information to obtain first configuration information used to describe the environment type resource and second configuration information used to describe the workload type resource;
determine a first resource based on the first configuration information and the original resource allocated to the first cloud service, wherein the first resource is the environment type resource that is described in the first configuration information and that is not comprised in the original resource;
determine a second resource, wherein the second resource is the workload type resource described in the second configuration information; and
create the second cloud service based on the original resource allocated to the first cloud service, the first resource, and the second resource.

11. The system according to claim 10, wherein the first resource and an environment type resource comprised in the original resource are recorded in a same stack, and the second resource and a workload type resource comprised in the original resource are recorded in different stacks.

12. The system according to any one of claims 9 to 11, wherein the target deployment policy comprises a blue-green deployment policy, a gray deployment policy, or a batch rolling deployment policy.

13. The system according to claim 12, wherein the target deployment policy is the gray deployment policy, and the traffic management module is configured to:
segment the traffic on the first cloud service to obtain a first traffic fragment and a second traffic fragment;
migrate the first traffic fragment to the second cloud service; and
migrate the second traffic fragment to the second cloud service when the first traffic fragment passes abnormality check on the second cloud service.

14. The system according to claim 12, wherein the target deployment policy is the batch rolling deployment policy, and the traffic management module is configured to:
obtain batch information provided by the user, wherein the batch information indicates a quantity of reduced pods of the first cloud service and a quantity of added pods of the second cloud service in each batch, and a quantity of pods comprised when the second cloud service is created is a preset value; and
decrease, in batches based on the batch information, a quantity of pods comprised in the first cloud service, and increase the quantity of pods comprised in the second cloud service.

15. The system according to claim 14, wherein the traffic management module is configured to:
obtain confirmation information of the user for a target batch, wherein the target batch is one of a plurality of batches indicated by the batch information; and
decrease, in batches based on the batch information and the confirmation information, the quantity of pods comprised in the first cloud service, and increasing the quantity of pods comprised in the second cloud service.

16. The system according to any one of claims 9 to 15, wherein the first cloud service and the second cloud service belong to cloud services of different versions; or the first cloud service and the second cloud service belong to cloud services of a same version.

17. A computing device cluster, comprising at least one computing device, wherein each computing device comprises a processor and a memory; and
the processor is configured to execute instructions stored in the memory, for the computing device cluster to perform the method according to any one of claims 1 to 8.

18. A computer-readable storage medium, wherein the computer-readable storage medium stores instructions, and when the instructions are run on at least one computing device, the at least one computing device is enabled to perform the method according to any one of claims 1 to 8.
